# EUROPÄISCHE PATENTANMELDUNG

(11) **EP 4 480 752 A1**
(43) Veröffentlichungstag der Anmeldung: **25.12.2024**
(21) Anmeldenummer: 24183585.9
(22) Anmeldetag: 21.06.2024
(51) Int. Cl.: B60P 7/08

(54) **SCHIENENSYSTEM MIT ANKERELEMENT**

(30) Priorität: 22.06.2023 DE 102023116445
(71) Anmelder: allsafe GmbH & Co. KG, 78234 Engen (DE)
(72) Erfinder: FUGEL, Thomas, 78234 Engen (DE)
(74) Vertreter: Patentanwälte und Rechtsanwalt Weiß, Arat & Partner mbB

(57) **Zusammenfassung**

Die vorliegende Erfindung betrifft Schienensystem zumindest zum Anordnen von Ladungssicherungselementen in Fahrzeugen, insbesondere Kühlfahrzeugen, wobei die Fahrzeuge zumindest ein Paneel aufweisen, wobei das Schienensystem wenigstens eine Schiene aufweisend eine Systemfräsung zumindest mit einer sich in Schienenlängsrichtung erstreckenden hinterschnittenen Schienenlängsnut, sowie jeweils eine an jedem distalen Ende der wenigstens einen Schiene angeordnete Endkappe aufweist. Das Schienensystem umfasst zudem ein sich zumindest abschnittweise entlang der Schienenlängsachse erstreckendes Ankerelement. Ferner betrifft die Erfindung ein Paneel mit einem entsprechenden Schienensystem.

## Beschreibung

Die vorliegende Erfindung betrifft ein Schienensystem zumindest zum Anordnen von Ladungssicherungselementen in Fahrzeugen sowie ein Paneel mit einem entsprechenden Schienensystem.

### STAND DER TECHNIK

Ein Paneel für einen Kofferaufbau mit einer Schiene zum Befestigen von Zusatzeinrichtungen ist in der EP 2 116 448 B1 beschrieben. Das offenbarte Paneel weist wenigstens eine Schiene zum Befestigen von Zusatzeinrichtungen eines Kofferaufbaus auf, wobei die Schiene mittels eines Klebstoffs über eine stoffschlüssige Verbindung an dem Paneel fixiert ist. Im Zusammenhang mit der Befestigung der Schiene an der inneren Decklage des Paneels kann die inneren Decklage des Paneels nach innen umgebogene Stege aufweisen, wobei die Schiene über die nach innen umgebogenen Stege an dem Paneel fixiert ist. Dies erfordert einen präzisen Prozess beim Prägen der Deckschicht sowie stabile umgebogene Stege, um ein prozesssicheres Halten der Schiene zu ermöglichen. Dabei definieren die nach innen umgebogenen Stege mit ihren freien Enden oder Rändern eine längs zur Schiene verlaufende Öffnung in der inneren Decklage, in der die Schiene angeordnet ist. Damit ein Austreten des Schaumes beim Ausschäumvorgang verhindert wird, bedarf es der zusätzlichen Anordnung von Abschlusselementen an den Schienenenden, die wiederum mit der Schiene kraft- und/oder formschlüssig verbunden und passgenau angeordnet werden müssen.

Ein weiteres Paneel bzw. ein Strukturelement mit einer sich an dem Strukturelement abstützenden Funktionsschiene ist in der EP 4 059 775 A1 beschrieben. Das Strukturelement weist eine sich senkrecht zum Ladeboden des Aufbaus erstreckende und zum Laderaum hin offene Aufnahme auf, in welcher die Funktionsschiene aufgenommen und mit der Aufnahme verklebt ist. Die Funktionsschiene weist zudem einen Klemmsteg auf, der derart klemmend in Anlage an der Aufnahme anliegt, dass die Funktionsschiene gegenüber einem Auszug aus der Aufnahme in Richtung des Laderaumes abgesichert ist. Zur Herstellung einer entsprechenden Aufnahme zum Anordnen dieser Klemmstege bedarf es jedoch einer tiefen Prägung mit hinreichend tiefen Prägekanten, sodass unkontrollierte Risse im Blech durch entsprechende Freischnitte verhindert werden müssen, was wiederum zur Folge hat, dass die freigeschnitten Blechabschnitte den Prozess des Ausschäumens erschweren und ggf. aufgrund Austrittstellen des Schaumes sogar unmöglich machen.

### OFFENBARUNG DER ERFINDUNG

Es ist daher die Aufgabe der vorliegenden Erfindung, die voranstehend beschriebenen Nachteile bei einer innerhalb eines Paneels angeordneten, insbesondere eingeschäumten Schiene zumindest teilweise zu beheben. Insbesondere ist es die Aufgabe der vorliegenden Erfindung ein Schienensystem zur Verfügung zu stellen, dank welchem eine Innendeckschicht eines Paneels ohne einen Freischnitt an den Außenkanten der Prägung zur Erzeugung einer Schienenaufnahmeöffnung geprägt werden kann. Ferner ist es die Aufgabe der Erfindung ein Paneel zur Verfügung zu stellen, bei welchem die Prägekanten nicht einreißen und bei welchem die Oberfläche der in das Paneel zumindest abschnittsweise eingebrachten Schiene bündig mit einer nicht geprägten Innendeckschichtoberfläche des Paneels abschließt. Zudem soll dabei die Herstellung der Schiene bzw. des Schienensystems sowie des Paneels mit dem Schienensystem einfach und kostengünstig sein.

Die voranstehende Aufgabe wird gelöst durch ein Schienensystem mit den Merkmalen des Anspruchs 1 sowie durch ein Paneel mit den Merkmalen gemäß Anspruch 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Schienensystem beschrieben sind, selbstverständlich auch im Zusammenhang mit dem erfindungsgemäßen Paneel und jeweils umgekehrt, so dass bezüglich der Offenbarung zu den einzelnen Erfindungsaspekten stets wechselseitig Bezug genommen wird beziehungsweise werden kann.

Das erfindungsgemäße Schienensystem dient zumindest zum Anordnen von Ladungssicherungselementen in Fahrzeugen, insbesondere Kühlfahrzeugen, wobei die Fahrzeuge zumindest ein Paneel, vorteilhaft eine Mehrzahl an Paneelen aufweisen. Das erfindungsgemäße Schienensystem weist wenigstens eine Schiene aufweisend eine Systemfräsung zumindest mit einer sich in Schienenlängsrichtung erstreckenden hinterschnittenen Längsnut auf. Des Weiteren weist das erfindungsgemäße Schienensystem zumindest jeweils eine an jedem distalen Ende der Schiene angeordnete Endkappe auf. Das erfindungsgemäße Schienensystem umfasst zudem ein sich zumindest abschnittweise entlang der Schienenlängsachse erstreckendes Ankerelement wenigstens zur Aufnahme von zumindest im Wesentlichen orthogonal zu einer Schienenlängsachse verlaufenden Kräften, insbesondere Querkräften, zumindest während der Nutzung von Last tragenden Ladungssicherungselementen. Das bedeutet, dass beispielsweise bei der Anordnung von Balken als Ladungssicherungselemente, die durch die Beladung auf die Balken wirkende Kräfte, insbesondere Querkräfte, durch das erfindungsgemäße Schienensystem, insbesondere das im Paneel eingebrachte erfindungsgenmäße Schienensystem aufgenommen werden, ohne dass das Schienensystem, insbesondere die Schiene des Schienensystems eine vordefinierte Positionierung im Paneel verlässt, insbesondere verrutscht, ausbricht usw. Entsprechendes gilt für etwaige andere Ladungssicherungselemente, wie beispielsweise Stangen oder Fittinge etc. durch welche zumindest im Wesentlichen orthogonal zur Schienenlängsachse aufgebrachte Kräfte aufgenommen werden können, ohne zu einer ungewollten Neu-Positionierung oder einem Verschieben des Schienensystems zu führen.

Schienen, wie Airline-Schienen, Verzurrschienen oder Befestigungsscheinen etc. werden vorrangig in Nutzfahrzeugen, wie beispielsweise Lastkraftwagen, Anhängern oder Sattelaufliegern eingesetzt, um das damit zu transportierende Gut entsprechend zu sichern. Insbesondere bei sogenannten Kofferaufbauten sind zumindest die Seitenwände, Stirnwand sowie das Dach des Laderaumes durch feste Wände verschlossen. Die Rückwand wird zumeist durch sich öffnende Türen realisiert. Die Seitenwände, das Dach, die Stirnwand, der Boden und/oder die Türen sind zudem in Form von mehrschichtigen Paneelen aufgebaut. Die Paneele weisen dabei eine äußere strukturgebende Decklage sowie eine dazwischen befindliche Kernlage aus geschäumtem Kunststoff auf. Es ist auch bekannt, dass die Decklagen bei Bedarf jeweils mehrlagig ausgebildet sein können. Die Decklagen dienen der Aussteifung der Paneele und weisen folglich wenigstens eine Schicht aus einem Metall und/oder einem faserverstärkten Kunststoff auf. Die aus einem geschäumten Kunststoff bestehende Kernlage weist vorteilhaft eine hohe thermische Isolation auf, sodass die Paneele aufweisenden Kofferaufbauten insbesondere für den Transport von temperaturempfindlichen Gütern, wie beispielsweise für Kühltransporte, geeignet sind.

Es ist des Weiteren allgemein bekannt, dass Aufbauten von Nutzfahrzeugen Schienen, insbesondere Funktionsschienen bzw. Airline-Schienen aufweisen. Diese Schienen dienen vorteilhaft dazu eine Sicherung der zu transportierenden Ladung, insbesondere durch die Anordnung von Ladungssicherungselementen, zu ermöglichen. Die Schienen weisen Rastelemente, wie Öffnungen oder Bohrungen auf, die dazu dienen die Ladungssicherungselemente entsprechend anzuordnen. Ladungssicherungselemente können dabei Haken für Spanngurte, Fittinge, Nutensteine oder auch Stangen oder Balken sein. Insbesondere bei der Anordnung von Balken, wie beispielsweise den Doppelstockbalken, welche sich im Wesentlichen quer innerhalb des Laderaumes erstrecken, bedarf es der Anordnung von zwei einander gegenüberliegenden Schienen, in denen der Doppelstockbalken angeordnet werden kann. Vorteilhaft dienen die Last tragenden Doppelstockbalken beispielsweise dazu den Laderaum derart zu unterteilen, dass dieser durch ein mögliches übereinander Anordnen des Ladegutes, wobei beispielsweise eine Palette auf dem Laderaumboden platziert ist, während die darüberliegende Palette auf den sich quer durch den Laderaum erstreckenden Doppelstockbalken platziert ist, hinsichtlich dessen Ladekapazitäten optimal ausgenutzt werden kann.

Die Systemfräsung der Schiene des erfindungsgemäßen Schienensystems umfasst zumindest eine sich in Längsrichtung der Schiene erstreckende hinterschnittene Längsnut bzw. Schienenlängsnut. Diese Schienenlängsnut kann sich vollständig entlang der Schienenlängsachse, aber auch nur abschnittsweise oder in Abschnitten unterteilt entlang der Schienenlängsachse erstrecken. Es ist des Weiteren möglich, dass die Längsnut zwischen zwei Profilstreifen ausgebildet ist, wie dies beispielsweise in der DE 202 18 780 U1 gezeigt ist. Die Offenbarung dieser Schrift wird hierbei vollumfänglich zum Bestandteil der Anmeldung gemacht.

Des Weiteren weist das erfindungsgemäße Schienensystem zumindest jeweils eine an jedem distalen Ende der Schiene angeordnete Endkappe auf. Es ist denkbar, dass die Endkappen vor dem Einbringen des Schienensystems in das Paneel thermisch an die Schiene des Schienensystems gefügt werden. Die Endkappen bilden demnach den Abschluss der Schiene an beiden Seiten. Die Endkappen weisen vorteilhaft auch eine im Wesentlichen gleiche geometrische Formgebung - insbesondere ein Hinblick auf den jeweiligen Querschnitt - wie die Schiene selbst auf. Die Endkappen sind vorteilhaft derart mit der Schiene verbunden, dass ein Schaumaustritt an der Verbindungsstelle ausgeschlossen ist. Dies kann beispielsweise auch über eine geometrische Formgebung, wie eine formschlüssige Verbindung mit oder ohne Schaumbremse als auch über ein Verkleben oder das bereits benannte thermisches Fügen erfolgen.

Das Ankerelement des erfindungsgemäßen Schienensystems erstreckt sich zumindest abschnittweise entlang der Schienenlängsachse. Das bedeutet, dass das Ankerelement sich vollständig entlang der Schienenlängsachse, aber auch nur abschnittsweise oder in Abschnitten unterteilt entlang der Schienenlängsachse erstrecken kann. Das Ankerelement übernimmt bevorzugt die Funktion eines Schaumankers und überträgt insbesondere Querkräfte, die beispielsweise durch Zugbeanspruchung während des Betriebs des Fahrzeuges, insbesondere während der Ladungssicherung einer Ladung bzw. Last auftreten können. Vorteilhaft wird dank des Ankerelementes auch die im nachfolgend noch näher erläuterte Klebeverbindung der Schiene entlastet. Das Ankerelement dient vorteilhaft zum Fixieren der Schiene in definierter Position zumindest während eines Ausschäumens des Paneels. Das bedeutet, dass das Ankerelement ein prozesssicheres Anordnen der Schiene, insbesondere des gesamten Schienensystems im Paneel ermöglicht.

Gemäß einer vorteilhaften Ausführungsform weist die Schiene des Schienensystems einen Lastaufnahmeabschnitt zur Anordnung von Ladungssicherungselementen auf, wobei die Systemfräsung ausgehend von einer äußeren Oberfläche des Lastaufnahmeabschnittes ausgebildet ist. Des Weiteren umfasst die Schiene einen Verbindungsabschnitt zum Anordnen des Ankerelementes oder das Ankerelement selbst, sprich ohne einen Verbindungsabschnitt. Die Schiene des Schienensystems ist demnach aus unterschiedlichen Abschnitten ausgebildet. Während beispielsweise gemäß einer ersten Ausführungsform des Schienensystems der Lastaufnahmeabschnitt der Schiene dazu dient durch eine entsprechende Ausgestaltung der Systemfräsung Lasten mit Hilfe anordenbarer Ladungssicherungselemente, wie beispielsweise Fittinge, Nutensteine, Haken oder gar Stangen oder Balken, wie Doppelstockbalken, zu sichern, dient der Verbindungsabschnitt dazu sich mit dem Ankerelement zu verbinden. Dabei ist es denkbar, dass der Verbindungsabschnitt und das Ankerelement zwei zueinander separierte Teile darstellen, die über entsprechende Verbindungselemente miteinander verbunden werden. Es ist jedoch ebenso möglich, dass das Schienensystem gemäß einer weiteren Ausführungsform anstelle des Verbindungsabschnittes das Ankerelement selbst aufweist, beziehungsweise, dass der Verbindungsabschnitt das Ankerelement darstellt.

Der Lastaufnahmeabschnitt ist im Querschnitt betrachtet vorteilhaft im Wesentlichen U-förmig gestaltet. Die Schenkel der U-Form umrahmen folglich die hinterschnittene Längsnut und erstrecken sich vorteilhaft auch in eine im Wesentlichen horizontale Richtung. Das bedeutet, dass die Schenkel jeweils einen abgeknickten Bereich bzw. einen abgeknickten Abschnitt aufweisen. Die sich im Wesentlichen in horizontaler Richtung erstreckenden abgeknickten Abschnitte der U-förmigen Lastaufnahmeabschnittes weist dann eine Oberfläche und eine der Oberfläche gegenüberliegende Grundfläche auf.

Im Rahmen der Erfindung ist es denkbar, dass das Ankerelement ein von der Schiene separiertes Ankerelement ist, welches zumindest mit einem Verbindungsabschnitt der Schiene und/oder einem Endkappenverbindungsabschnitt der Endkappen zumindest zeitweise formschlüssig und/oder kraftschlüssig wirkverbunden ist. Die separierte Herstellung von Schiene und Ankerelement ermöglich eine einfache und kostengünstige Ausgestaltung beider Bestandteile des Schienensystems. Des Weiteren ist es vorteilhaft möglich das Ankerelement bereits in das noch nicht ausgeschäumte Paneel zu platzieren, um dann die Schiene beispielsweise über eine Clips-Verbindung oder Ähnlichem mit dem Ankerelement zu verbinden. Das Ankerelement kann vorteilhaft an der Schiene selbst, an den jeweiligen Endkappen oder auch an der Schiene und den Endkappen befestigt bzw. damit verbunden werden. Sofern eine Anordnung des Ankerelementes an den Endkappen ermöglicht werden soll, weisen auch die Endkappen einen entsprechenden Verbindungsabschnitt, insbesondere einen Endkappenverbindungsabschnitt auf. Vorteilhaft ist der Endkappenverbindungsabschnitt zumindest geometrisch vergleichbar, vorteilhaft geometrisch identisch zu dem Verbindungsabschnitt der Schiene ausgestaltet.

Es ist des Weiteren denkbar, dass der Verbindungsabschnitt der Schiene zwei einander im Wesentlichen gegenüberliegende Verbindungselemente aufweist, welche sich jeweils zumindest abschnittsweise entlang der Schienenlängsachse sowie in eine im Wesentlichen orthogonal zur Schienenlängsachse verlaufenden Richtung erstrecken. Die Schiene weist demnach vorteilhaft zwei Verbindungselemente auf, welche sich jeweils entlang der Schienenlängsachse oder zumindest abschnittsweise oder in Abschnitten entlang der Schienenlängsachse erstrecken. Die Verbindungselemente sind dabei zumindest abschnittsweise vergleichbar zu einer Wandung oder einem Steg oder einem Vorsprung ausgestaltet und erstrecken sich demnach auch in definierter Länge entlang einer zumindest nahezu orthogonal zur Schienenlängsachse verlaufenden Richtung. Die Verbindungselemente sind vorteilhaft in Schienenbreitenrichtung beabstandet zueinander an der Schiene ausgebildet. Die Verbindungselemente können dabei Haken, Nasen, Klammern, Clips-Halter usw. aufweisen, also Elemente mittels denen eine formschlüssige oder eine kraftschlüssige Verbindung mit dem Ankerelement realisiert werden kann. Sofern auch die Endkappen einen Endkappenverbindungsabschnitt aufweisen, der eventuell gemeinsam mit dem Verbindungsabschnitt der Schiene oder auch alleinig, also ohne den Verbindungsabschnitt der Schiene, insbesondere ohne die Schiene, zum Anordnen des Ankerelementes dienen soll, weist auch der Endkappenverbindungsabschnitt entsprechende Endkappenverbindungselemente auf. Die Endkappenverbindungselemente sind dabei vergleichbar zu den zuvor beschriebenen Verbindungselementen der Schiene ausgestaltet. Die Endkappenverbindungselemente erstrecken sich auch zumindest in eine orthogonal zu der Endkappenlängsrichtung verlaufenden Richtung. Die Endkappenverbindungselemente können in geometrischer Gestalt eines Pins mit Haken, Widerhaken usw. ausgestaltet sein.

Vorteilhaft weist das Ankerelement einen Ankerabschnitt sowie einen Verbindungsgegenabschnitt auf, wobei der Verbindungsgegenabschnitt zwei einander im Wesentlichen gegenüberliegende Verbindungsgegenelemente umfasst, welche zumindest mit den Verbindungselementen des Verbindungsabschnittes der Schiene zumindest zeitweise formschlüssig und/oder kraftschlüssig wirkverbunden sind. Es ist auch denkbar, dass die Verbindungsgegenabschnitte des Ankerelementes in Wechselwirkung mit den Endkappenverbindungselementen oder mit den Endkappenverbindungselementen und den Verbindungselementen der Schiene treten, um ein Anordnen des Ankerelementes an der Schiene zu ermöglichen. Es ist möglich, dass das es sich bei der Verbindung der Verbindungsgegenabschnitte des Ankerelementes mit den Verbindungsabschnitten der Schiene und/oder den Endkappenverbindungsabschnitten um eine lösbare oder eine nicht lösbare Verbindung handelt.

Unter einer lösbaren Verbindung wird dabei eine Verbindung verstanden, bei welcher die aneinander angeordneten Elemente jederzeit zerstörungsfrei oder beschädigungsfrei voneinander entfernt werden können.

Vorteilhaft findet eine sogenannte Clip-Verbindung Anwendung, wobei die Verbindungsgegenelemente an die Verbindungselemente der Schiene und/oder an die Endkappenverbindungselemente angeclipst bzw. eingeclipst werden. Es sind auch Haken-Widerhaken-Verbindungen oder Steckverbindungen etc. denkbar.

Gemäß einer alternativen Ausführungsform der vorliegenden Erfindung ist das Ankerelement ein mit der Schiene verbundenes Ankerelement, insbesondere ein einstückig mit der Schiene verbundenes Ankerelement, welches sich zumindest abschnittweise entlang der Schienenlängsachse sowie in einer sich zur Schienenlängsachse im Wesentlichen orthogonalen Richtung erstreckt. Vorteilhafterweise ist eine separate Anordnung des Ankerelementes an die Schiene zur Erzeugung des Schienensystems hier nicht erforderlich. Vielmehr wird die Schiene mit einem entsprechenden Ankerelement gefertigt, welches sich anstelle eines Verbindungsabschnittes ausbildet oder angeformt an den Verbindungsabschnitt ausgebildet ist.

Es ist des Weiteren denkbar, dass die Endkappen eine Querschnittsgeometrie aufweisen, welche im Wesentlichen zumindest der Querschnittsgeometrie der Schiene entspricht, sodass die Endkappen einen Endkappenverbindungsabschnitt zum zumindest zeitweisen formschlüssigen und/oder kraftschlüssigen Wirkverbinden mit einem Ankerelement oder einen Ankerabschnitt aufweisen. Insbesondere weisen in dieser Ausführungsform des Schienensystems die Endkappen einen Endkappenverbindungsabschnitt, insbesondere Endkappenverbindungselemente auf, welcher mit den Verbindungsgegenabschnitt, insbesondere den Verbindungsgegenelementen des Ankerelementes derart verbindbar sind, dass zwischen den jeweiligen Endkappen und dem Ankerelement eine lösbare oder eine unlösbare Verbindung geschaffen werden kann. Wie oben bereits aufgeführt, wird unter einer lösbaren Verbindung im Rahmen der Erfindung eine Verbindung verstanden, bei welcher die aneinander angeordneten Elemente jederzeit zerstörungsfrei oder beschädigungsfrei voneinander entfernt werden können.

Gemäß einer Ausführungsform der Erfindung weist eine der Oberfläche des Lastaufnahmeabschnittes der Schiene abgewandte Grundfläche des Lastaufnahmeabschnittes der Schiene eine Klebenut auf, welche sich zumindest abschnittsweise entlang der Schienenlängsachse erstreckt. Vorteilhaft erstreckt sich dabei die Klebenut entlang der gesamten Schienenlängsachse oder abschnittsweise oder in Abschnitten entlang der Schienenlängsachse. Es ist denkbar, dass die Klebenut als eine Art Vertiefung, also Längsnut ausgestaltet ist, die in der Grundfläche der Schiene ausgebildet ist. Die Grundfläche der Schiene ist dabei vorteilhaft diejenige Fläche, welche eine Innendeckschicht des Paneels, in welche die Schiene bzw. das Schienensystem angeordnet wird, zumindest abschnittsweise kontaktiert. Es ist des Weiteren denkbar, dass die Klebenut an den Grundflächen beider abgeknickter Bereiche der U-Schenkel des U-förmigen Lastaufnahmeabschnittes ausgebildet ist. Demnach würde die Schiene zwei sich im Wesentlichen zumindest abschnittsweise entlang der Schienenlängsachse erstreckende Klebenuten aufweisen.

Besonders vorteilhaft ist es denkbar, dass die jeweilige Endkappe eine Endkappenoberfläche sowie eine der Endkappenoberfläche abgewandte Endkappengrundfläche aufweist, wobei die Endkappengrundfläche eine Klebenut derart umfasst, dass bei Anordnung der Endkappen an der Schiene das Schienensystem eine im Wesentlichen umlaufende (eventuell teilweise unterbrochene umlaufende) Klebenut aufweist. Die Endkappengrundfläche ist vorteilhaft die Fläche, welche bei einer Anordnung des Schienensystems im Paneel die Innendeckschicht des Paneels zumindest abschnittsweise kontaktiert. Demzufolge kontaktiert ein in die Klebenut eingebrachtes Klebemittel bzw. Haftmittel die Innendeckschicht des Paneels zumindest abschnittsweise. Die Verwendung eines Klebemittels sorgt vorteilhaft für eine zumindest zeitweise und vorteilhaft auch zumindest abschnittsweise unlösbare Verbindung zwischen dem Schienensystem, insbesondere der Schiene des Schienensystems und dem Paneel, insbesondere der Innendeckschicht des Paneels bzw. Teilbereichen der Innendeckschicht des Paneels. Die Teilbereiche der Innendeckschicht des Paneels sind dabei vorteilhaft zumindest abschnittsweise verformte Prägebereiche oder Prägeflächen. Mit Hilfe der Klebeverbindung zwischen Paneel und Schiene wird das Schienensystem zumindest zweitweise während des Ausschäumens des Paneels an einer gewünschten Position gehalten. Der Ausschäumprozess wird erst dann gestartet, wenn der Klebstoff die Schiene mit der Innendeckschicht verschiebefrei verbunden hat. Dadurch wird unter anderem auch ein Verschieben des Schienensystems, insbesondere der Schiene des Schienensystems, zumindest während des Prozesses des Ausschäumens des Paneels verhindert.

In einer vorteilhaften Ausführungsform ist es möglich, dass die Systemfräsung eine Vielzahl von Positionsbereichen, welche auch als Rastausnehmungen bezeichnet werden können, aufweist. Diese Positionsbereiche sind vorteilhaft als entlang der Schienenlängsachse gleichmäßig zueinander beabstandete Bohrungen in der Oberfläche der Schiene im Bereich der hinterschnittenen Längsnut ausgebildet. Demnach sind die Positionsbereiche bei einer Draufsicht auf die Schiene des Schienensystems sichtbare Bereiche. Alternativ ist es möglich, dass die Positionsbereiche als innerhalb der hinterschnittenen Längsnut im Bereich einer der Oberfläche der Schiene gegenüberliegenden Hinterschnittfläche ausgebildete entlang der Schienenlängsachse gleichmäßig zueinander beabstandete Sacklochfräsungen ausgebildet sind. In diesem Fall sind die Positionsbereiche bei einer Draufsicht auf die Schiene des Schienensystems nicht sichtbar. In beiden Alternativen dienen die Positionsbereiche jedoch dazu die anzuordnenden Lastaufnahmeelemente in einer definierten Position entlang der Schienenlängsachse zu fixieren. Hierfür können entsprechende Gegenelemente in die Positionsbereiche eingreifen.

Es ist des Weiteren ein Paneel mit einem Schienensystem gemäß der vorgenannten Art beansprucht. Erfindungsgemäß weist das Paneel wenigstens eine Innendeckschicht, eine Außendeckschicht sowie zwischen der Innendeckschicht und der Außendeckschicht befindlichen Schaum, insbesondere Polyurethan-Schaum auf. Vorteilhaft ist das Schienensystem derart innerhalb des Paneels angeordnet ist, dass die Schiene des Schienensystems zumindest nach dem Ausschäumen des Paneels bündig, das bedeutet insbesondere ohne Überstand, in der Innendeckschicht des Paneels angeordnet ist. Bei Angeordnetem und eingeschäumtem Schienensystem nimmt das Ankerelement des Schienensystems vorteilhaft zumindest im Wesentlichen orthogonal zur Schienenlängsachse verlaufende Kräfte, insbesondere Querkräfte, zumindest während der Nutzung von Last tragenden Ladungssicherungselementen auf. Dadurch wird vorteilhaft ein ungewolltes Verschieben des Schienensystems im Paneel bei Nutzung während einer Ladungssicherung vermieden. Des bedeutet, dass das Ankerelement für eine feste Fixierung der Schiene am Paneel auch während der Anordnung der Lastaufnahmeelemente sowie während der Befestigung und Fixierung der Ladung mittels der in der Schiene des Schienensystems fixierten Lastaufnahmeelementen dient.

Vorteilhaft ist durch die Ausgestaltung des Schienensystems die Schiene des Schienensystems, insbesondere der Lastaufnahmeabschnitt der Schiene, derart dünnwandig ausgestaltet, dass eine tiefe bzw. starke Prägung der Innendeckschicht des Paneels zur Erzeugung einer Schienenaufnahmeöffnung nicht erforderlich ist. Vielmehr muss die Innendeckschicht lediglich in den längsverlaufenden Flanschbereichen der Schiene sowie an den jeweiligen Enden der Endkappen nur minimal geprägt werden. Unter einer minimalen Prägung wird im Rahmen der Erfindung eine Prägung von weniger als 5mm, vorteilhaft von weniger als 4 mm und besonders vorteilhaft von weniger als 3mm (Prägetiefe) verstanden. Dadurch wird vorteilhaft ein Einreißen der Kanten der Prägungen vermieden, wodurch auch ein ungewolltes Austreten des einzuschäumenden Schaumes zumindest während des Ausschaumvorganges verhindert wird.

Bei dem beschriebenen Paneel ergeben sich sämtliche Vorteile, die bereits zu einem Schienensystem gemäß dem ersten Aspekt der Erfindung beschrieben worden sind.

Es ist des Weiteren ein Verfahren zum Herstellen eines oben genannten Paneels aufgezeigt, welches wenigstens die folgenden Schritte aufweist:
- Prägung der Innendeckschicht des Paneels ohne Freischnitt an den Außenkanten der Prägung zur Erzeugung einer Schienenaufnahmeöffnung,
- Anordnen des Schienensystems in der Schienenaufnahmeöffnung sowie in einem zwischen Innendeckschicht und Außendeckschicht befindlichen Hohlraum derart, dass die Oberfläche der Schiene des Schienensystems bündig mit einer nicht geprägten Innendeckschichtoberfläche verläuft,
- Ausschäumen des Hohlraums mit einem Schaum, insbesondere einem PU-Schaum.

Ergänzende Schritte zum Verfahren sind hierbei beispielsweise:
- schaumdichtes Verbinden der Endkappen mit den distalen Enden der Schiene über eine geometrische Lösung, die eine in den Endkappen integrierte Schaumbremse ausweist oder thermisches Fügen der Endkappen an die distalen Enden der Schiene, insbesondere an die distalen Enden des Lastaufnahmeabschnittes der Schiene zeitlich bevor die Schiene bzw. das Schienensystem in die Schienenaufnahmeöffnung des Paneels eingebracht wird, wobei das Verbinden der Schiene mit dem Ankerelement zeitlich vor oder nach dem Anordnen der Endkappen an der Schiene erfolgen kann und/oder
- Aufbringung eines Klebemittels in die Klebenut der Schiene sowie der Endkappen zeitlich bevor die Schiene bzw. das Schienensystem in die Schienenaufnahmeöffnung des Paneels eingebracht wird und/oder
- Festkleben der Schiene des Schienensystems sowie der mit der Schiene verbundenen Endkappen an einen geprägten bzw. gebogenen Abschnitt der Innendeckschicht des Paneels zeitlich nachdem das Schienensystem in der Schienenaufnahmeöffnung sowie in einem zwischen Innendeckschicht und Außendeckschicht befindlichen Zwischenraum angeordnet ist.

Bei dem beschriebenen Verfahren ergeben sich sämtliche Vorteile, die bereits zu einem Schienensystem gemäß dem ersten Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein erfindungsgemäßes Schienensystem sowie ein Paneel mit erfindungsgemäßem Schienensystem werden nachfolgend anhand von Zeichnungen näher erläutert. Es zeigen jeweils schematisch:
- Figur 1: in einer Draufsicht eine Ausführungsform einer Schiene mit Endkappen des erfindungsgemäßen Schienensystems,
- Figur 2: in einer seitlichen Schnittdarstellung der Schnitt A-A der Figur 1,
- Figur 3: in einer perspektivischen Ansicht der Unterseite der in der Figur 1 dargestellten Ausführungsform einer Schiene mit Endkappen,
- Figur 4: in einer perspektivischen Ansicht der Oberseite der in der Figur 1 dargestellten Ausführungsform einer Schiene mit Endkappen,
- Figur 5: in einer Schnittansicht die in den Figuren 1 bis 4 dargestellte Ausführungsform einer Schiene in zweifacher Ausfertigung verbunden mit einer Ausführungsform eines Ankerelementes innerhalb eines Paneels,
- Figur 6: in einer vergrößerten Ansicht den Ausschnitt A der Figur 5,
- Figur 7: in einer Draufsicht eine Ausführungsform eines Ankerelementes eines erfindungsgemäßen Schienensystems,
- Figur 8: in einer seitlichen Schnittdarstellung der Schnitt B-B der Figur 7,
- Figur 9: in einer vergrößerten Ansicht den Ausschnitt C der Figur 8,
- Figur 10: in einer perspektivischen Ansicht von unten die in der Figur 7 gezeigte Ausführungsform eines Ankerelementes,
- Figur 11: in einer perspektivischen Ansicht eine Oberseite einer weiteren Ausführungsform eines erfindungsgemäßen Schienensystems,
- Figur 12: in einer perspektivischen Ansicht eine Unterseite der in Figur 11 gezeigten weiteren Ausführungsform eines erfindungsgemäßen Schienensystems,
- Figur 13: in einer Schnittansicht die in den Figuren 11 und 12 dargestellte Ausführungsform eines erfindungsgemäßen Schienensystems in zweifacher Ausfertigung innerhalb eines Paneels,
- Figur 14: in einer vergrößerten Ansicht den Ausschnitt B der Figur 13,
- Figur 15: in einer Draufsicht eine weitere Ausführungsform des erfindungsgemäßen Schienensystems,
- Figur 16: in einer Untersicht die Unterseite der in der Figur 15 gezeigten Ausführungsform des erfindungsgemäßen Schienensystems,
- Figur 17: in einer seitlichen Schnittdarstellung die in den Figuren 15 und 16 gezeigte Ausführungsform des erfindungsgemäßen Schienensystems angeordnet in einem Paneel,
- Figur 18: in einer vergrößerten Ansicht den Ausschnitt D der Figur 17,
- Figur 19: in einer Draufsicht eine Ausführungsform einer Innendeckschicht mit geprägten Wandungen eines Paneels und
- Figur 20: in einer perspektivischen Ansicht ein Abschnitt der in der Figur 19 gezeigte Ausführungsform einer Innendeckschicht.

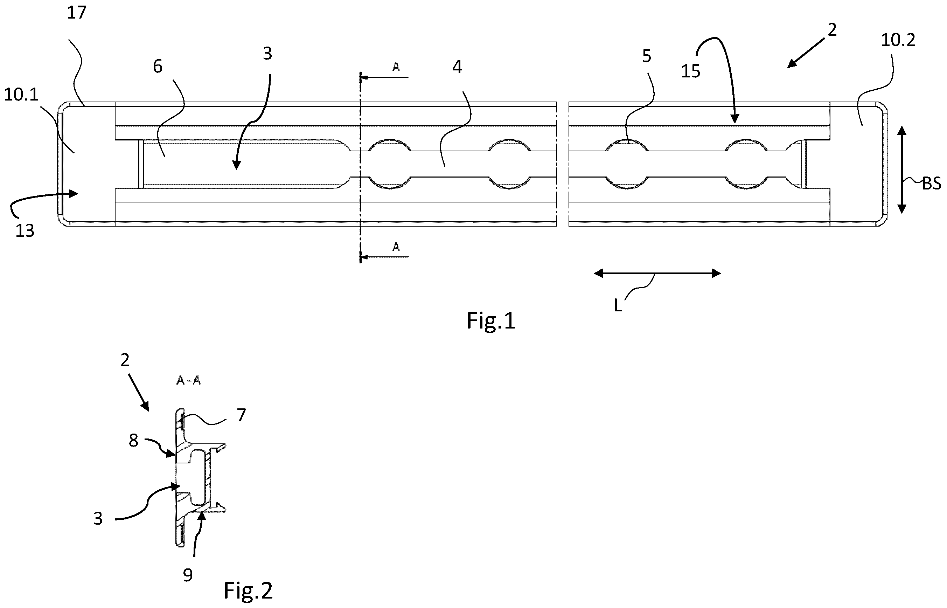

Elemente mit gleicher Funktion und Wirkungsweise sind in den Figuren 1 bis 20 jeweils mit denselben Bezugszeichen versehen.

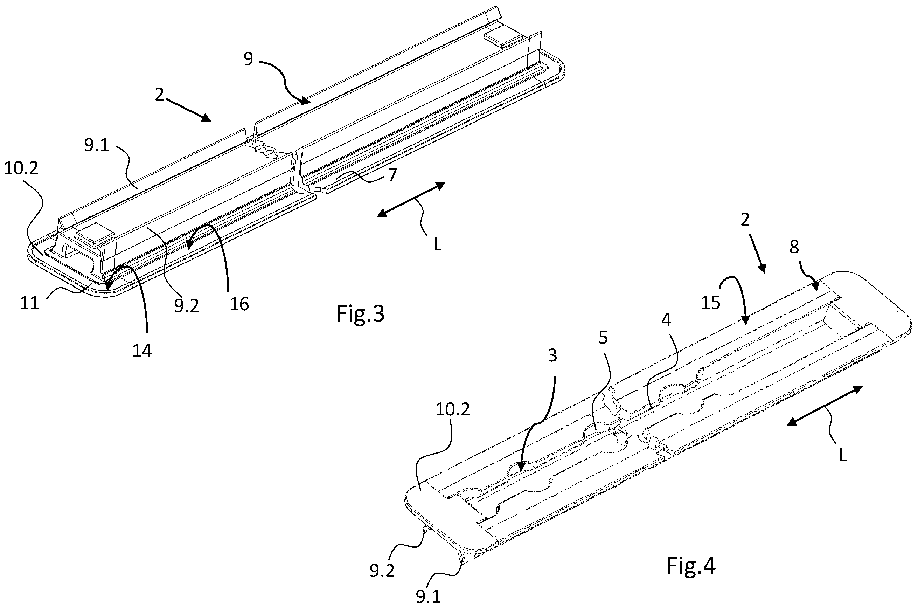

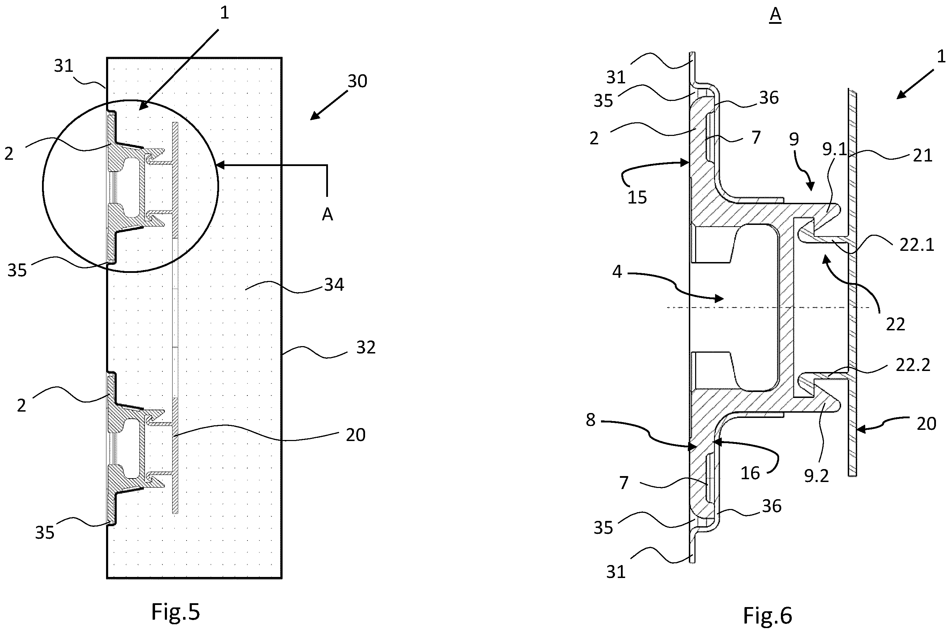

In den Figuren 1 bis 4 ist eine Ausführungsform einer Schiene 2 gezeigt, welches ein Bestandteil einer Ausführungsform eines erfindungsgemäßen Schienensystems 1, wie in den Figuren 5 und 6 gezeigt, ist. Dabei zeigt die Figur 1 in einer Draufsicht eine Ausführungsform einer Schiene 2 mit Endkappen 10.1, 10.2 des erfindungsgemäßen Schienensystems 1, die Figur 2 in einer seitlichen Schnittdarstellung den Schnitt A-A der Figur 1, die Figur 3 in einer perspektivischen Ansicht die Unterseite der in der Figur 1 dargestellten Ausführungsform und die Figur 4 in einer perspektivischen Ansicht die Oberseite der in der Figur 1 dargestellten Ausführungsform. Die Schiene 2 weist eine Systemfräsung 3 auf, welche sich als eine in Schienenlängsrichtung L erstreckende hinterschnittene Schienenlängsnut 4 sowie in regelmäßigen Abständen in Schienenlängsrichtung L entlang der Schienenlängsnut 4 verteilten Positionsbereichen 5 ausbildet. Die Positionsbereiche 5 sind vorteilhaft als Bohrungen ausgestaltet. Es ist des Weiteren denkbar, dass die Systemfräsung 3 der Schiene 2 auch einen Einführbereich 6 aufweist. Der Einführbereich 6 dient vorteilhaft dazu hier nicht gezeigte Lastaufnahmeelemente in die Schienenlängsnut 4 einzubringen. Die Positionsbereiche 5 dienen dann vorteilhaft dazu das Lastaufnahmeelement in einer definierten Position entlang der Schienenlängsnut 4 zu positionieren und ein ungewolltes Verschieben / Bewegen des Lastaufnahmeelementes in der Schienenlängsnut 4 entlang der Schienenlängsrichtung L zu vermeiden. Es ist denkbar, dass die Schienenlängsnut 4 derart mittig ausgebildet ist, dass zu beiden Seiten der Schienenlängsnut 4 im Wesentlichen gleich breite Stege der Schienenoberfläche 15 entstehen. Es wäre jedoch auch eine hinsichtlich der Schienenbreite BS außermittig ausgebildet Schienenlängsnut 4 denkbar. An beiden distalen Enden der Schiene 2 sind Endkappen 10.1, 10.2 vorteilhaft schaumdicht angeordnet. Das bedeutet, dass die Endkappen 10.1, 10.2 derart mit den distalen Enden der Schiene 2 verbunden sind, dass bei einem späteren Ausschäumen des beispielsweise in der Figur 5 gezeigten Paneels 30 kein Schaum 34 zwischen der Schiene 2 und den Endkappen 10.1, 10.2 nach außen austreten kann. Die Endkappen 10.1, 10.2 werden beispielsweise mittels eines thermischen Fügeverfahrens mit der Schiene 2 verbunden. Jedoch ist auch die Verwendung anderer Fügeverfahren denkbar. Die Endkappen 10.1, 10.2 sind derart an die Schiene 2 angeordnet, dass die Endkappenoberfläche 13 plan bzw. eben zur Schienenoberfläche 15 ist. Die Schiene 2 sowie auch die Endkappen 10.1, 10.2 können jeweils abgerundete Kanten 17 aufweisen. Die Schienenoberfläche 15 sowie auch die Endkappenoberfläche 13 sind vorteilhaft eben ausgebildet und weißen keine Wölbungen oder vergleichbare Erhebungen auf. Dadurch können diese plan in eine Schienenaufnahmeöffnung 35 eines Paneels 30, wie beispielsweise in der Figur 5 gezeigt, eingesetzt werden.

Wie insbesondere aus den Figuren 2 und 3 hervorgeht, weist die Schiene 2 eine Klebenut 7 auf, welche an der Schienengrundfläche 16 ausgebildet ist. Die Klebenut 7 erstreckt sich im Wesentlichen in Schienenlängsrichtung L. Vorteilhaft ist die Klebenut 7 beidseitig der Systemfräsung 3 an der Schienengrundfläche 16 ausgebildet. Auch die jeweiligen Endkappen 10.1 und 10.2, sprich die erste Endkappe 10.1 und die zweite Endkappe 10.2 weisen jeweils eine Klebenut 11 auf. Die Endkappenklebenut 11 ist auf der Endkappengrundfläche 14 ausgebildet, insbesondere in einer C-Form. Vorteilhaft bildet die Endkappenklebenut 11 beim Anordnen der Endkappen 10.1, 10.2 an der Schiene 2 eine mit der Schienenklebenut 7 umlaufende (gemeinsame) Klebenut.

Wie insbesondere in den Figuren 2 bis 6 gezeigt, weist die Schiene 2 einen Lastaufnahmeabschnitt 8 und einen Verbindungsabschnitt 9 auf. Der Lastaufnahmeabschnitt 8 ist dabei der Abschnitt der Schiene 2, welcher zumindest die Systemfräsung 3 sowie die Klebenut 7 der Schiene umfasst. Der Verbindungsabschnitt 9 ist dabei der Abschnitt der Schiene 2, welcher zumindest mit einem Ankerelement 20, wie dieses beispielsweise in den Figuren 5 und 6 gezeigt ist, in Wirkverbindung gebracht ist, um eine Ausführungsform eines erfindungsgemäßen Schienensystems 1 zu bilden. Der Verbindungsabschnitt 9 der Schiene 2 weist wenigstens zwei Verbindungselemente 9.1 und 9.2, nämlich ein erstes Verbindungselement 9.1 und ein zweites Verbindungselement 9.2 auf. Diese Verbindungselemente 9.1, 9.2 sind beispielsweise in Gestalt eines Hakens oder Widerhakens ausgebildet und erstrecken sich zumindest abschnittsweise wandförmig/stegförmig in Schienenlängsrichtung L. Die hakenartigen Nasen oder Fortsätze der Verbindungselemente 9.1, 9.2, welche auch als Verbindungsstege verstanden werden können, weisen dabei mit deren Hakenform zueinander, insbesondere in Richtung der Schienenlängsnut 4, sind also im Wesentlichen zur Schienenmittelachse gerichtet. Es wäre jedoch auch denkbar, dass die hakenartigen Fortsätze bzw. Ausformungen von der Schienenlängsachse 4 weg zeigen, also im Wesentlichen nach außen zu den abgerundeten Kanten 17 gerichtet sind.

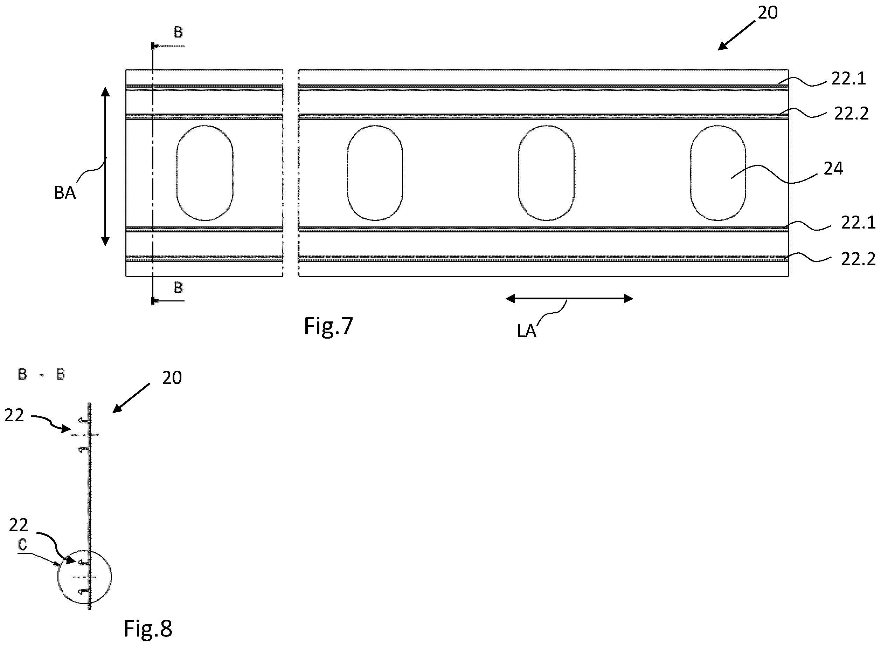

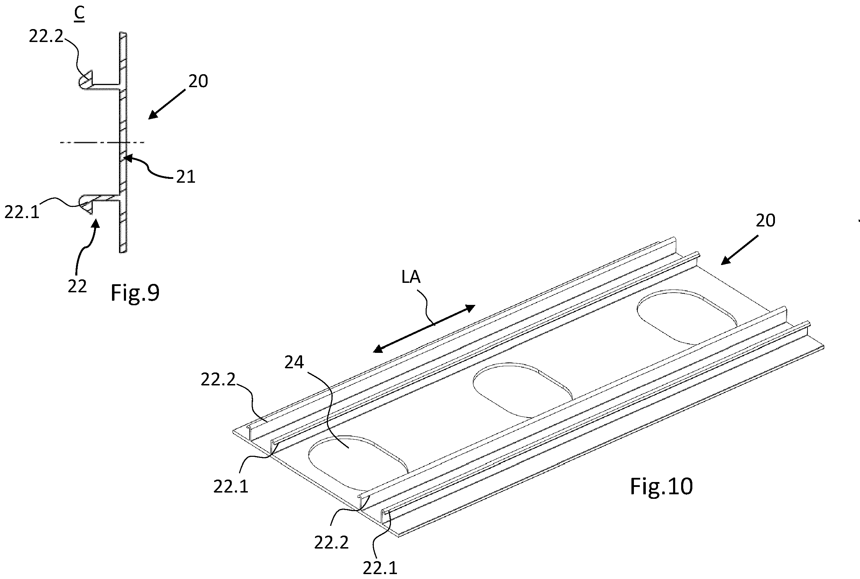

Das Ankerelement 20, wie insbesondere in den Figuren 5 und 6 gezeigt, weist einen Ankerabschnitt 21 sowie zumindest einen Verbindungsgegenabschnitt 22 auf. Der wenigstens eine Verbindungsgegenabschnitt 22 weist zumindest ein erstes Verbindungsgegenelement 22.1 und ein zweites Verbindungsgegenelement 22.2 auf. Diese Verbindungsgegenelemente 22.1 und 22.2 dienen dazu eine zumindest zeitweise kraftschlüssige und/oder formschlüssige lösbare oder unlösbare Verbindung mit den Verbindungselementen 9.1 und 9.2 des Verbindungsabschnittes 9 der Schiene 2 zu ermöglichen. Die Verbindungsgegenelemente 22.1, 22.2 sind geometrisch vergleichbar zu den Verbindungselementen 9.1, 9.2 ausgebildet. Die Verbindungsgegenelemente 22.1, 22.2 sind, wie insbesondere in den Figuren 7 und 10 ersichtlich, wie Stege bzw. Wandungen ausgebildet, die sich in einer Ankerelementlängsrichtung LA zumindest abschnittsweise erstrecken.

Wie insbesondere in den Figuren 5 und 6 ersichtlich, greifen bzw. haken die Verbindungselemente 9.1, 9.2 der Schiene 2 mit den Verbindungsgegenelementen 22.1, 22.2 des Ankerelementes 20 derart ineinander, dass das Ankerelement 20 und die Schiene 2 zumindest zeitweise miteinander zu einem Schienensystem 1 verbunden werden. Es ist denkbar, dass bei einer Verbindung zwischen dem Ankerelement 20 und der Schiene 2 eine zumindest zeitweise unlösbare Verbindung oder eine stetig lösbare Verbindung erzeugt wird.

In der Figur 5 ist in einer Schnittansicht die in den Figuren 1 bis 4 dargestellte Ausführungsform einer Schiene 2 in zweifacher Ausfertigung verbunden mit einer Ausführungsform eines Ankerelementes 20 innerhalb eines Paneels 30 gezeigt, wobei die Figur 6 in einer vergrößerten Ansicht den Ausschnitt A der Figur 5 aufzeigt. Wie insbesondere in der Figur 5 zu sehen ist, weist das Paneel 30 zumindest eine Innendeckschicht 31 und eine Außendeckschicht 32 auf, welche beispielsweise aus einem Metallwerkstoff, wie Stahl gebildet sind bzw. werden. Die Innendeckschicht 31 und/oder die Außendeckschicht 32 sind beispielsweise Stahlplatten. In die Innendeckschicht 31 wird mittels spezieller, hier nicht weiter beschriebener Verfahren, zumindest eine Schienenaufnahmeöffnung 35, vorteilhaft, wie in der Figur 5 gezeigt, werden auch zwei Schienenaufnahmeöffnungen 35, beispielsweise durch Prägung, ausgebildet. In diese Schienenaufnahmeöffnungen 35 werden die Schienen 2 derart eingesetzt, dass die Oberfläche 15 des Lastaufnahmeabschnittes 8 der Schiene 2 im Wesentlichen plan zur Oberfläche der Innendeckschicht 31 positioniert ist. Die geprägte Wandung 36 der Innendeckschicht 31 ist dabei derart geprägt bzw. verformt, dass diese zumindest abschnittsweise an der Schienengrundfläche 16 anliegt. Vorteilhaft erstreckt sich die geprägte Wandung 36 auch weiter entlang des Lastaufnahmeabschnittes 8 in Richtung des Verbindungsabschnittes 9 der Schiene 2. Es wäre sogar denkbar, dass die geprägte Wandung 36 einen Abschnitt des Verbindungsabschnittes 9 kontaktiert. Der Lastaufnahmeabschnitt 8 der Schiene 2 weist im Bereich der Schienenschenkel, welche sich beidseitig der Systemfräsung 4 ausbilden und in Schienenlängsrichtung L erstrecken eine maximale Höhe (Materialstärke) von weniger als 5mm, vorteilhaft von weniger als 4mm und besonders vorteilhaft von weniger als 3 mm auf. Der Verbindungsabschnitt 9 der Schiene 2 ist zwischen der Innendeckschicht 31 und der Au-ßendeckschicht 32 innerhalb eines Hohlraumes oder Zwischenraumes 33 angeordnet. Es ist denkbar, dass das Ankerelement 20 bereits in diesem Zwischenraum 33 positioniert ist. Es ist jedoch auch denkbar, dass das Ankerelement erst mit der Anordnung der Schiene 2 in den Zwischenraum 33 eingebracht wird. Der Verbindungsabschnitt 9 der Schiene 2 wird mit dem Verbindungsgegenabschnitt 22 des Ankerelementes 20 in Wirkverbindung gebracht. Insbesondere verbinden oder verhaken oder verclipsen sich die Verbindungselemente 9.1, 9.2 mit den Verbindungsgegenelementen 22.1, 22.2, wie insbesondere in der Figur 6 ersichtlich. Vorteilhaft ist in den gezeigten Klebenuten 7 und 11 ein hier nicht gezeigter Klebstoff eingebracht bzw. aufgetragen, welcher beim Anordnen der Schiene 2 an die geprägten Wandungen 36 eine zumindest stoffschlüssige Verbindung zwischen Schiene und geprägter Wandung 36 bzw. Innendeckschicht 31 ermöglicht, sodass, auch wenn nachfolgend Schaum 34, wie in der Figur 5 gezeigt, in den Zwischenraum 33 eingelassen, insbesondere eingespritzt wird, um das Paneel auszuschäumen, die Schiene 2 in definierter Position verbleibt.

Es ist in einer Ausführungsform, wie in der Figur 5 gezeigt, denkbar, dass zwei Schienen 2 mit einem gemeinsamen Ankerelement 20 verbunden werden. In diesem Fall weist das Schienensystem zwei Schienen 2 und ein Ankerelement 20 auf. Das Ankerelement 20 weist hierfür einen Ankerabschnitt 21 und zwei Verbindungsgegenabschnitte 22 auf. Es wäre alternativ auch denkbar, dass das Schienensystem 1 ein Ankerelement 20 und mehr als zwei Schienen 2, insbesondere drei oder vier Schienen 2 aufweist. In diesem Fall, würde das Ankerelement 20 einen Ankerabschnitt 21 und mehr als zwei Verbindungsgegenabschnitte 22, insbesondere drei oder vier Verbindungsgegenabschnitte 22 aufweisen. Alternativ ist es denkbar, dass das Schienensystem lediglich aus einer Schiene 2 und einem Ankerelement 20 besteht. Es ist anzumerken, dass hinsichtlich der Anzahl an Schienen und Ankerelementen jedwede Kombination ausgewählt werden kann, um ein Schienensystem zu erstellen. Dabei ist das Schienensystem 1 bestehend aus zwei Schienen 2 mit einem gemeinsamen Ankerelement 20 gemäß der ersten Ausführungsform der vorliegenden Erfindung eine präferierte Ausgestaltung.

Eine Ausführungsform eines Ankerelementes 20 mit einem Ankerabschnitt 21 sowie zwei Verbindungsgegenabschnitten 22 ist beispielhaft in den Figuren 7 bis 10 gezeigt. Die Figur 7 zeigt dabei in einer Draufsicht die Unterseite einer Ausführungsform eines Ankerelementes 20 eines erfindungsgemäßen Schienensystems 1, wobei in der Figur 8 in einer seitlichen Schnittdarstellung der Schnitt B-B der Figur 7 und in der Figur 9 in einer vergrößerten Ansicht der Ausschnitt C der Figur 8 gezeigt ist. Die Figur 10 zeigt in einer perspektivischen Ansicht von unten die in der Figur 7 gezeigte Ausführungsform des Ankerelementes 20. Das Ankerelement 20 weist einen Ankerabschnitt 21 auf, welcher im Wesentlichen eine plattenförmige bzw. brettförmige geometrische Gestalt aufweist. Dabei ist die Länge des Ankerelementes 20 in Ankerelementlängsrichtung LA betrachtet größer als die Breite des Ankerelementes 20 in Ankerelementbreitenrichtung BA betrachtet. Das Ankerelement 20 weist einen Ankerabschnitt 21 sowie zwei Verbindungsgegenabschnitte 22 auf, die in Ankerelementbreitenrichtung BA betrachtet beabstandet zueinander ausgebildet sind. Jeder Verbindungsgegenabschnitt 22 weist zwei Verbindungsgegenelemente 22.1, 22.2 auf. Demnach weist das in den Figuren 7 bis 10 aufgezeigte Ankerelement 20 zumindest vier Verbindungsgegenabschnitte 22.1, 22.2 auf. Die Verbindungsgegenabschnitte 22.1, 22.2 erstrecken sich in geometrischer Gestalt einer Erhebung, Wandung oder eines Vorsprunges oder Steges zumindest abschnittsweise entlang der Ankerelementlängsrichtung LA und weisen eine definierte Höhe bzw. Erstreckung in orthogonaler Richtung zur Ankerelementlängsrichtung LA sowie zur Ankerelementbreitenrichtung BA auf. Es ist denkbar, dass das Ankerelement 20 wenigstens eine Ankerelementöffnung 24 oder mehr als eine, insbesondere eine Mehrzahl an Ankerelementöffnungen 24 aufweist. Die Ankerelementöffnungen 24 sind Bohrungen oder Ausschneidungen oder Ausstanzungen etc., welche sich in Form eines Loches oder Langloches durch das Material des Ankerabschnittes 21 erstrecken. Die Ankerelementöffnungen 24 können dabei in Ankerelementlängsrichtung LA gleich verteilt und zueinander in gleichem Abstand beabstandet ausgebildet sein. Des Weiteren sind die Ankerelementöffnungen 24 vorteilhaft zwischen den einzelnen Verbindungsgegenabschnitten 22 des Ankerelementes 20 ausgebildet. Die Ankerelementöffnungen 24 dienen vorteilhaft der Material- und Gewichtseinsparung und sorgen für einen definierten Durchlass des in das Paneel 30 eingespritzten Schaumes 34 (vgl. hierzu Figur 5). Es ist jedoch auch denkbar, dass das Ankerelement 20 keine Ankerelementöffnungen 24 aufweist.

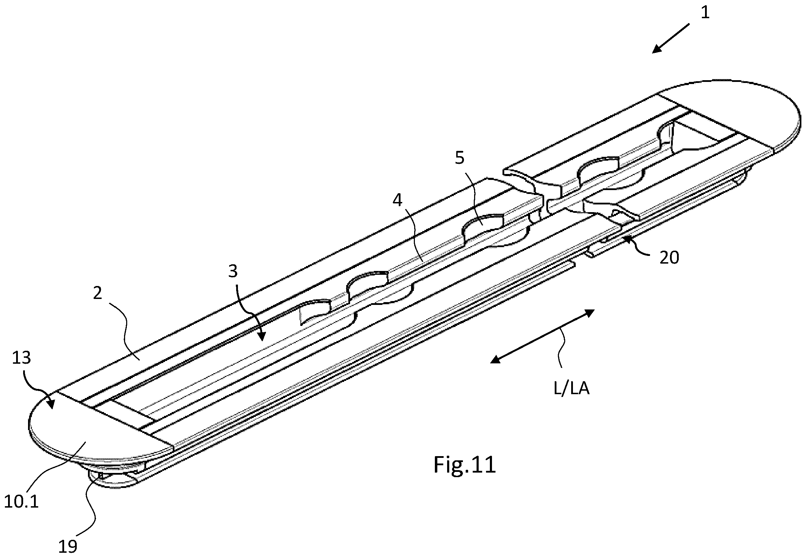

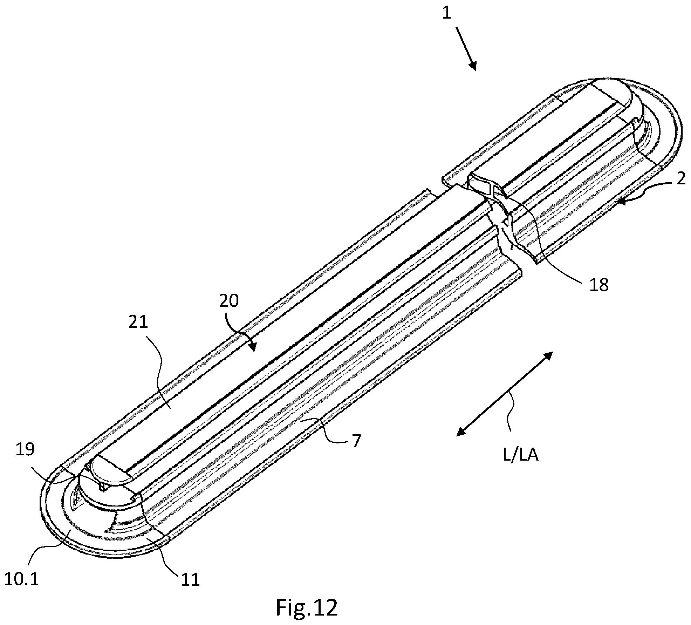

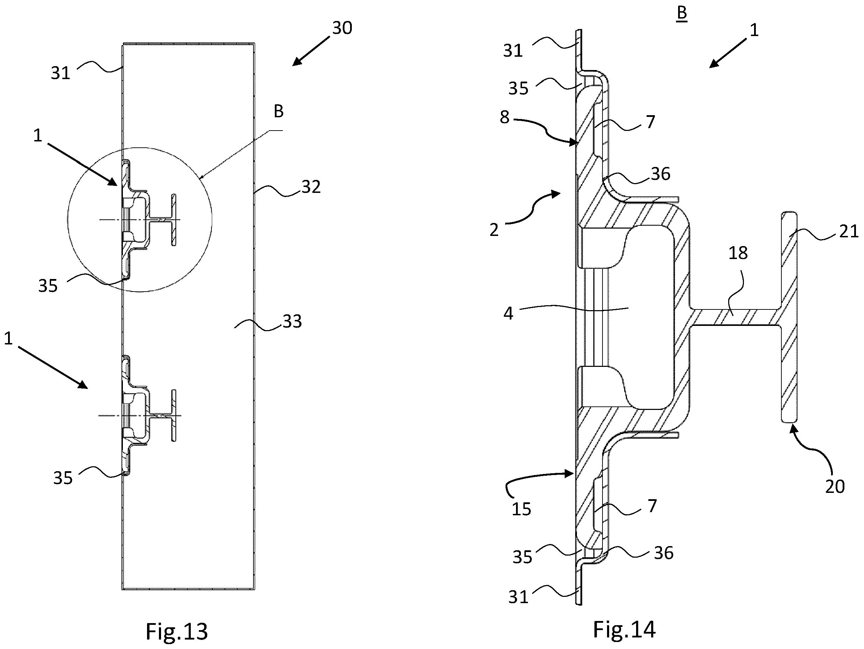

Eine weitere Ausführungsform eines erfindungsgemäßen Schienensystems 1 ist in den Figu-ren 11 bis 14 gezeigt. In der Figur 11 ist in einer perspektivischen Ansicht eine Oberseite einer weiteren Ausführungsform des erfindungsgemäßen Schienensystems 1 gezeigt, wobei die Figur 12 in einer perspektivischen Ansicht die Unterseite der in Figur 11 gezeigten weiteren Ausführungsform des erfindungsgemäßen Schienensystems 1 aufzeigt. In der Figur 13 ist in einer Schnittansicht die in den Figuren 11 und 12 dargestellte Ausführungsform eines erfindungsgemäßen Schienensystems 1 in zweifacher Ausfertigung innerhalb eines Paneels 30 gezeigt. Und Figur 14 zeigt in einer vergrößerten Ansicht den Ausschnitt B der Figur 13. Wie in den Figuren 11 bis 14 ersichtlich, weist die alternative Ausgestaltung des erfindungsgemäßen Schienensystems 1 ebenfalls eine Schiene 2 sowie ein Ankerelement 20 auf. Jedoch sind die Schiene 2 und das Ankerelement 20 nicht separiert voneinander ausgebildet, sondern einteilig bzw. einstückig. Demnach bedarf es vorteilhaft keines Verbindungselementes an der Schiene 2, welches mit einem Verbindungsgegenelement des Ankerelementes 20 in Wirkverbindung gebracht werden muss, um eine Anordnung von Ankerelement 20 an Schiene 2 zu gewährleisten. Vielmehr ist die Schiene 2 mit Ankerelement 20 einteilig, vorteilhaft einstückig ausgebildet. Das bedeutet, dass die Schiene 2 einen Lastaufnahmeabschnitt 8 aufweist, von welchem sich direkt ein Steg 18 weg erstreckt und an dessen anderem Ende der Ankerabschnitt 21 ausbildet ist. Die Schiene 2 weist ebenso, wie die in den Figuren 1 bis 6 der ersten gezeigten Ausführungsform des erfindungsgemäßen Schienensystems 1 gezeigte Schiene 2, eine Systemfräsung 3 mit einer hinterschnittenen Schienenlängsnut 4 und Positionsbereichen 5 auf. Ebenso sind zwei Endkappen 10.1, 10.2, wobei der Übersichtlichkeit halber in den Figuren 11 und 12 nur eine Endkappe 10.1. aufgezeigt ist, an jedem distalen Ende der Schiene 2 angeordnet, vorteilhaft thermisch gefügt. Auch die jeweiligen Endkappen 10.1 sind geometrisch vergleichbar zu der Schiene 2 ausgebildet. Das bedeutet, dass auch die jeweiligen Endkappen zusätzlich zu der entsprechenden Endkappenoberfläche 13 einen Steg 19 mit angebundenem Ausläufer für den Ankerabschnitt 21 aufweisen. Wie auch bereits zur vorherigen Ausführungsform der Schiene 2 mit angeordneten Endkappen 10.1, 10.2 beschrieben, weist auch die Schiene gemäß der Figuren 11 bis 14 eine Schienenklebenut 7 und die Endkappen 10.1, 10.2 jeweils eine Endkappenklebenut 11 auf. Dabei bilden die Schienenklebenut 7 und die Endkappenklebenut 11 bei der Anordnung der Endkappen 10.1, 10.2 an der Schiene 2 wieder eine (zumindest abschnittsweise) umlaufende (gemeinsame) Klebenut.

Wie aus den Figuren 11 bis 14 ersichtlich ist die geometrische Querschnittsform der Schiene 2 sowie auch der Endkappen 10.1 im Bereich des Ankerabschnittes 21 und des Steges 18 bzw. 19 im Wesentlichen eine T-Form. Es ist jedoch auch denkbar, dass die benannten Abschnitte eine Y-Form oder eine andere vergleichbare Form ausbilden bzw. aufweisen. Vorrangig ist eine Form gewählt, welches es ermöglicht eine hinreichende Menge Schaum derart zwischen das Ankerelement 20 bzw. den Ankerabschnitt 21 und der Schiene 2 zu platzieren, dass hinreichende Kräfte, insbesondere beispielsweise Querkräfte bei der Nutzung des Paneels im Fahrzeug aufgenommen werden können. Vorteilhaft erstreckt sich beispielsweise der Steg 18 der Schiene 2 im Wesentlichen in einer zur Ankerelementlängsrichtung LA orthogonalen Richtung zwischen dem Ankerabschnitt 21 und dem Lastaufnahmeabschnitt 8. Entsprechendes gilt für die Endkappen 10.1, 10.2.

Wie insbesondere auch in den Figuren 13 und 14 ersichtlich ist, kann das Schienensystem 1 in einem Paneel 30 angeordnet sein. Das Paneel 30 weist zumindest eine Innendeckschicht 31 und eine Außendeckschicht 32 auf, welche beispielsweise aus einem Metallwerkstoff, wie Stahl gebildet sind Die Innendeckschicht 31 und/oder die Außendeckschicht 32 sind beispielsweise Stahlplatten. In die Innendeckschicht 31 wird mittels spezieller, hier nicht weiter beschriebener Verfahren, zumindest eine Schienenaufnahmeöffnung 35, vorteilhaft, wie in der Figur 11 gezeigt, werden auch zwei Schienenaufnahmeöffnungen 35, beispielsweise durch Prägung, ausgebildet. In diese Schienenaufnahmeöffnungen 35 werden die Schienen 2 derart eingesetzt, dass die Oberfläche 15 des Lastaufnahmeabschnittes 8 der Schiene 2 im Wesentlichen plan zur Oberfläche der Innendeckschicht 31 positioniert ist. Die geprägte Wandung 36 der Innendeckschicht 31 ist dabei derart geprägt bzw. verformt, dass diese zumindest abschnittsweise an der Schienengrundfläche 16 anliegt. Vorteilhaft erstreckt sich die geprägte Wandung 36 auch weiter entlang des Lastaufnahmeabschnittes 8 in Richtung des Ankerabschnittes 21. Die Prägung der Innendeckschicht 31, insbesondere deren Ausgestaltung zur Bildung einer Schienenaufnahmeöffnung 35 sowie auch die Maße des Lastaufnahmeabschnittes 8 der Schiene 2 sind vergleichbar zur ersten Ausführungsform der Erfindung gemäß den Figuren 1 bis 6 ausgebildet, sodass auf die dazu aufgeführte Beschreibung hierbei Bezug genommen wird bzw. werden kann. Das in der Figur 13 gezeigte Paneel weist vorteilhaft zwei Schienensysteme 1 auf, wobei jedes Schienensystem 1 jeweils für sich allein einen Ankerabschnitt 21 aufweist bzw. ein Ankerelement 20 umfasst. Das Ankerelement 20, welches vorteilhaft zumindest den Ankerabschnitt 21 und besonders vorteilhaft den Ankerabschnitt 21 und den Schienensteg 18 (bzw. bei den Endkappen 10.1, 10.2 den Endkappensteg 19 und den Ankerabschnitt) umfasst, ist innerhalb des Zwischenraumes 33 des Paneels 30 positioniert. Vorteilhaft ist die geometrische Kontur des Ankerabschnitts 21 derart gewählt, dass eine möglichst große Oberfläche zum Umschäumen mit Schaum erzeugt wird.

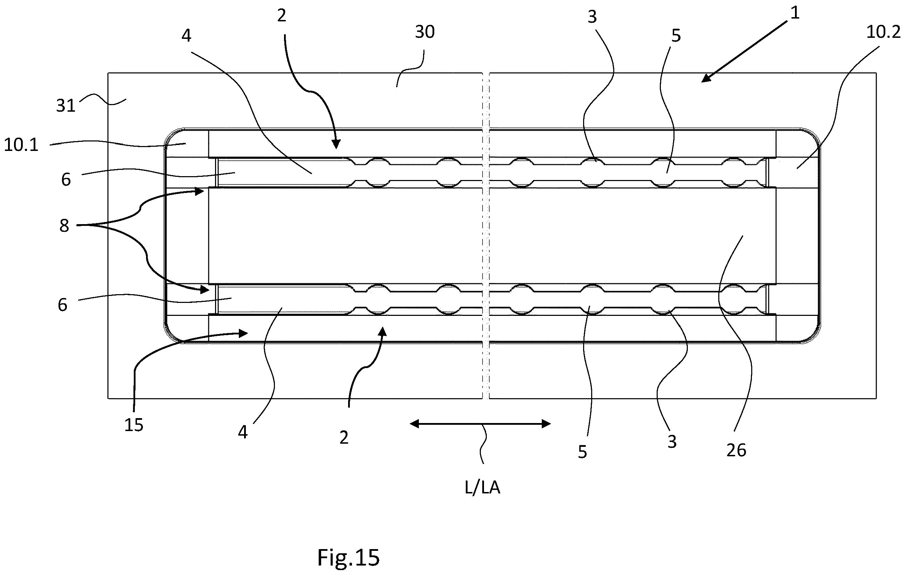

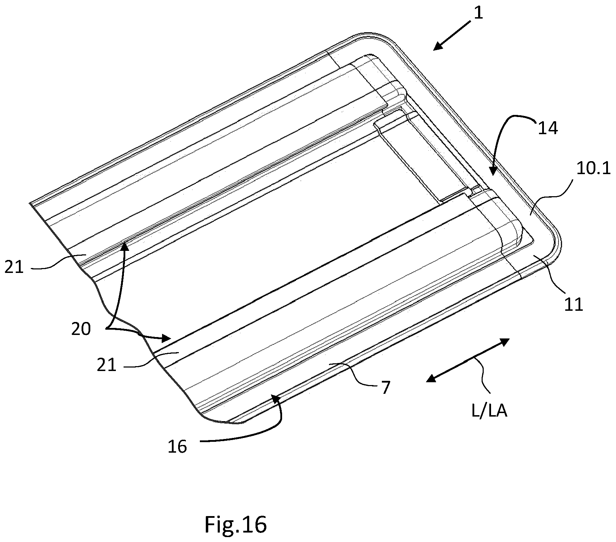

In den Figuren 15 bis 18 ist eine weitere Ausführungsform eines erfindungsgemäßen Schienensystems 1 gezeigt. Dabei ist in der Figur 15 die Draufsicht, also die Ansicht auf die Oberfläche 15 des Schienensystems 1 bzw. der Schienen 2 des Schienensystems 1 und in der Figur 16 in der Untersicht die Unterseite des Schienensystems 1 dargestellt. Wie in der Figur 15 gezeigt, weist das Schienensystem 1 zwei Schienen 2 auf, welche sich jeweils parallel zueinander beabstandet in Schienenlängsrichtung L erstrecken. Beide Schienen 2 sind mittels eines sich zwischen den Schienen 2 erstreckenden Schienenverbindungsabschnittes 26 miteinander verbunden. Der Schienenverbindungsabschnitt 26 ist dabei vorteilhaft eine Wandung oder eine Schicht, die sich zumindest abschnittsweise zwischen den beiden Schienen 2 in Schienenlängsrichtung erstreckt und beide Schienen 2 miteinander verbindet. Beide Schienen 2 weisen jeweils eine Systemfräsung 3 auf, welche sich als eine in Schienenlängsrichtung L erstreckende hinterschnittene Schienenlängsnut 4 sowie in regelmäßigen Abständen in Schienenlängsrichtung L entlang der Schienenlängsnut 4 verteilten Positionsbereichen 5 ausbildet. Die Positionsbereiche 5 sind vorteilhaft als Bohrungen ausgestaltet. Es ist des Weiteren denkbar, dass die jeweilige Systemfräsung 3 der Schienen 2 auch einen jeweiligen Einführbereich 6 aufweisen. Der Einführbereich 6 dient vorteilhaft dazu hier nicht gezeigte Lastaufnahmeelemente in die Schienenlängsnut 4 einzubringen. Die Positionsbereiche 5 dienen dann vorteilhaft dazu das Lastaufnahmeelement in einer definierten Position entlang der Schienenlängsnut 4 zu positionieren und ein ungewolltes Verschieben / Bewegen des Lastaufnahmeelementes in der Schienenlängsnut 4 entlang der Schienenlängsrichtung L zu vermeiden. Des Weiteren zeigt sich in der Figur 15 ein Lastaufnahmeabschnitt 8, welcher derjenige Abschnitt der Schienen 2 ist, welcher zumindest die Systemfräsung 3 aufweist. Das in der Figur 15 gezeigte Schienensystem 1 ist in einer Innendeckschicht 31 eines hier nicht vollständig gezeigten Paneels 30 angeordnet. Des Weiteren weist das Schienensystem 1 zwei Endkappen 10.1, 10.2 auf. Jeweils eine der Endkappen 10.1, 10.2 ist an einem distalen Ende des Schienensystems 1, bzw. der Schienen 2 angeordnet. Vorteilhaft sind die Endkappen 10.1, 10.2 Bestandteile des Schienensystems 1. Somit weisen beide Schienen 2 eine gemeinsame erste Endkappe 10.1 sowie eine gemeinsame zweite Endkappe 10.2 auf. Die Endkappen 10.1, 10.2 sind geometrisch den Schienen 2 und deren Ausgestaltung angepasst.

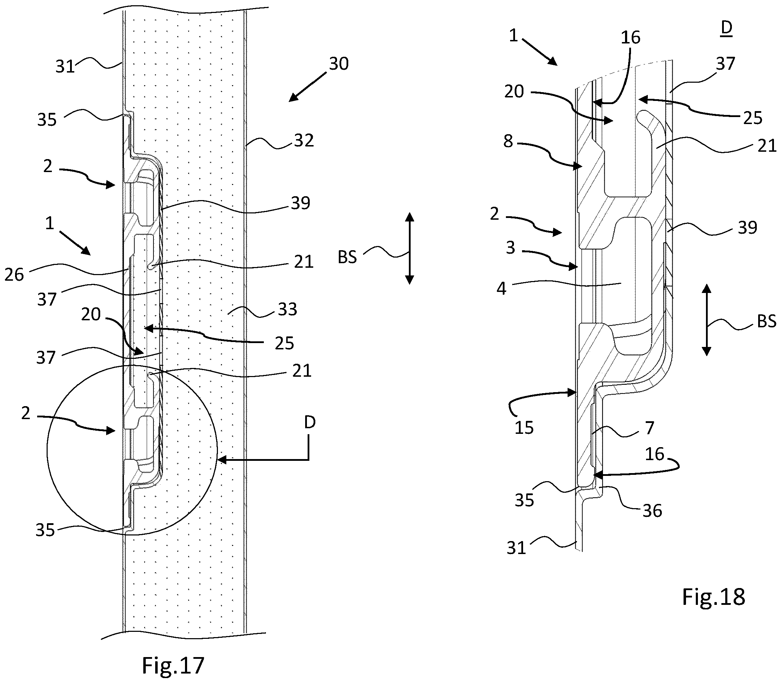

In der Figur 16 ist die Unterseite des in der Figur 15 gezeigten Schienensystems 1, insbesondere eines Abschnittes des Schienensystems 1 gezeigt. Das Schienensystem 1 weist ein Ankerelement 20 auf. Das Ankerelement 20 des Schienensystems 1 erstreckt sich über beide Schienen 2 des Schienensystems 1. Das Ankerelement 20 weist zwei Ankerabschnitte 21 auf. Die Ankerabschnitte 21 erstrecken sich vorteilhaft im Wesentlichen parallel zueinander in Schienenlängsrichtung L in Gestalt einer Lippe, eines Vorsprunges, einer hinterschnittenen Wandung, einer Vertiefung oder in vergleichbarer Ausgestaltung. Die detaillierte Ausgestaltung des Ankerelementes 20, insbesondere der Ankerabschnitte 21 des Ankerelementes wird in der Figurenbeschreibung zu den Figuren 17 und 18 genauer beschrieben. Des Weiteren ist in der Figur 16 die Klebenut 7 der Schienen 2 sowie die Klebenut 11 der Endkappen 10.1, welche insbesondere in einer C-Form ausgebildet ist, beispielhaft gezeigt. Vorteilhaft bildet die Endkappenklebenut 11 beim Anordnen der Endkappen 10.1, 10.2 an der Schiene 2 eine mit der Schienenklebenut 7 umlaufende (gemeinsame) Klebenut, welche umlaufend um das Schienensystem 1 verläuft. Die Klebenut 7 der Schienen 2 ist auf der Schienengrundfläche 16 ausgebildet, während die Klebenut 11 der Endkappen 10.1 auf der Endkappengrundfläche 14 ausgebildet ist. Die Klebenuten 7 und 11 sind dabei vorteilhaft in Gestalt von Vertiefungen, Nuten, Rillen oder in vergleichbarer geometrischer Gestalt ausgebildet.

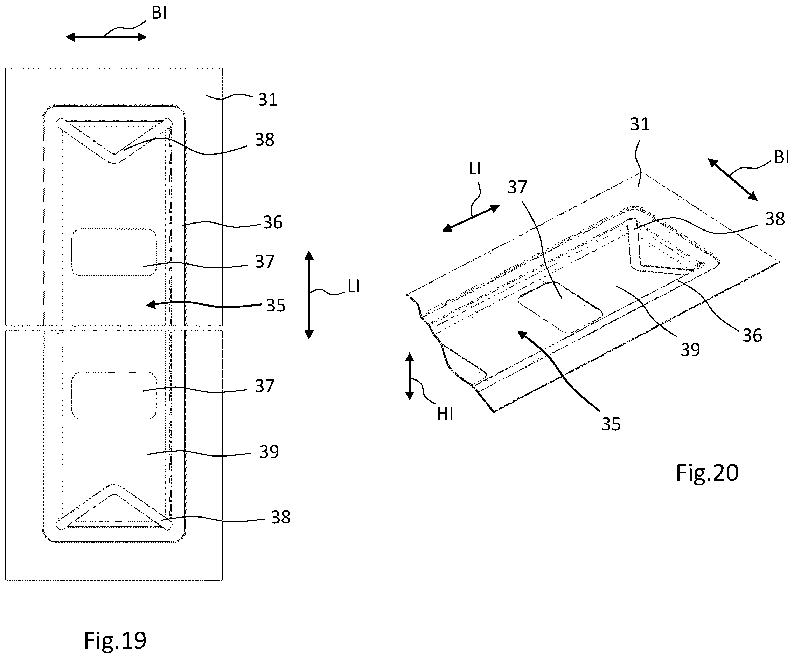

In der Figur 17 ist in einer seitlichen Schnittdarstellung die in den Figuren 15 und 16 gezeigte Ausführungsform des erfindungsgemäßen Schienensystems 1 angeordnet in einem Paneel 30 gezeigt. Das Paneel 30 ist in der Figur 17 lediglich abschnittsweise dargestellt. In der Figur 18 ist in einer vergrößerten Ansicht der Ausschnitt D der Figur 17 gezeigt. Beide Figuren 17 und 18 werden nachfolgend gemeinsam beschrieben. Wie bereits in der Figurenbeschreibung zu der Figur 15 aufgeführt, weist das Schienensystem 1 zwei Schienen 2 mit jeweils einer Systemfräsung 3 bzw. einer Schienenlängsnut 4 auf. Beide Schienen 2 sind mittels eines sich zwischen den Schienen 2 erstreckenden Schienenverbindungsabschnittes 26 miteinander verbunden. Der Schienenverbindungsabschnitt 26 ist dabei vorteilhaft eine Wandung oder eine Schicht, die sich zumindest abschnittsweise zwischen den beiden Schienen 2 in Schienenlängsrichtung erstreckt und beide Schienen 2 miteinander verbindet. Das Schienensystem 1 weist einen Lastaufnahmeabschnitt 8 auf. Der Lastaufnahmeabschnitt 8 ist dabei derjenige Abschnitt der Schiene 2, welcher zumindest die Systemfräsung 3 bzw. die Schienenlängsnut 4 umfasst. Das Schienensystem 1 ist in einer Schienenaufnahmeöffnung 35 der Innendeckschicht 31 des Paneels 30 angeordnet. Die Schienenaufnahmeöffnung 35 ist hierbei vorteilhaft eine Vertiefung, insbesondere eine konkave, nach innen gerichtete Wölbung bzw. Wanne Die Schienenaufnahmeöffnung 35 weist vorteilhaft eine geprägte (umlaufende) Wandung 36 sowie einen sich zwischen der geprägten Wandung erstreckenden Innendeckschichtabschnitt 39 auf. Vorteilhaft wird die wenigstens eine Schienenaufnahmeöffnung 35 beispielsweise durch Prägung ausgebildet. In diese Schienenaufnahmeöffnung 35 wird das Schienensystem 1 derart eingesetzt, dass die Oberfläche 15 des Lastaufnahmeabschnittes 8 der Schienen 2 im Wesentlichen zumindest abschnittsweise plan zur Oberfläche der Innendeckschicht 31 positioniert ist. Die geprägte Wandung 36 der Innendeckschicht 31 ist dabei derart geprägt bzw. verformt, dass diese zumindest abschnittsweise an der Schienengrundfläche 16 anliegt. Die Ausgestaltung dieser Innendeckschicht 31 ist in den nachfolgenden Figuren 19 und 20 gezeigt und wird in der dazugehörigen Figurenbeschreibung noch genauer erläutert. Das Paneel 30 weist, wie insbesondere in der Figur 17 gezeigt, zumindest die genannte Innendeckschicht 31, eine Außendeckschicht 32 sowie einen zumindest zwischen der Innendeckschicht 31 und der Außendeckschicht 32 ausgebildeten Zwischenraum 33 auf. Dieser Zwischenraum 33 ist mit Schaum 34, insbesondere PU-Schaum 34 ausgefüllt. Der Schaum 34 erstreckt sich dabei zumindest teilweise durch zumindest eine, vorteilhaft zumindest zwei Durchlassöffnungen 37 der Innendeckschicht 31, insbesondere des im Bereich der Schienenaufnahmeöffnung 35 zwischen den geprägten Wandungen 36 ausgebildeten Innendeckschichtabschnittes 39 bis in den Bereich des Ankerelementes 20, insbesondere bis in einem Schaumaufnahmeraum 25 hinein. Das Ankerelement 20 weist zwei Ankerabschnitte 21 auf. Jeder Ankerabschnitt 21 ist in einem Bereich einer der Schienen 2 des Schienensystems 1, insbesondere an der Außenseite des Schienengrundes der jeweiligen Schiene 2 ausgebildet. Vorteilhaft erstrecken sich beide Ankerabschnitte 21 zumindest abschnittsweise in Schienenbreitenrichtung BS zueinander. Zwischen den Ankerabschnitten 21 und der Schienengrundfläche 16 bzw. der inneren Oberfläche des Schienenverbindungsabschnittes 26 wird somit ein Schaumaufnahmeraum 25 ausgebildet. Der Schaumaufnahmeraum 25 ist folglich ein vom Schienensystem 1 geschaffener Raum, in welchem Schaum 34 aufgenommen ist bzw. wird. Der Schaumaufnahmeraum 25 liegt folglich außerhalb des Zwischenraums 33 des Paneels 30. Vorteilhaft ist der Schaumaufnahmeraum 25 im Bereich der Schienenaufnahmeöffnung 35 ausgebildet. Ein Austritt des Schaums 34 aus dem Schaumaufnahmeraum 25 nach Außen (also außerhalb des Paneels 30 und des Schienensystems 1) wird vorteilhaft zum einen durch das zumindest abschnittsweise Anliegen der Ankerabschnitte 21 an dem Innendeckschichtabschnitt 39 sowie durch die Klebung in der umlaufenden Schienenklebenut 7 bzw. Endkappenklebenut 11 verhindert. Die Ankerabschnitte 21 sind vorteilhaft in Gestalt einer sich zumindest abschnittsweise entlang der Schienenlängsrichtung erstreckenden Lippe oder eines entsprechenden Vorsprunges ausgebildet. Die Ankerabschnitte 21 erstrecken sich dabei zumindest abschnittsweise in Schienenlängsrichtung sowie in Schienenbreitenrichtung BS. Vorteilhaft erstrecken sich die beiden Ankerabschnitte 21 zumindest abschnittsweise parallel zum Schienenverbindungsabschnitt 26. Ein erstes distales Ende eines Ankerabschnittes 21 ist mit dem Schienengrund bzw. Schienenlängsnutgrund der jeweiligen Schiene 2 verbunden. Das zweite distale Ende des jeweiligen Ankerabschnittes 21 ist in Richtung des anderen Ankerabschnittes 21 des Ankerelementes 20 ausgerichtet und vorteilhaft zumindest abschnittsweise freiliegend. Es ist denkbar, dass dieses zweite distale Ende des jeweiligen Ankerabschnittes 21 zumindest abschnittsweise eine gebogene Form/Gestalt aufweist. Dabei ist es möglich, dass das zweite distale Ende des jeweiligen Ankerabschnittes 21 zumindest abschnittsweise in Richtung des Schienenverbindungsabschnittes 26 gebogen bzw. geformt ist. Es sind jedoch auch andere Ausgestaltungen der Ankerabschnitte 21 mit abweichender Biegung oder Formung denkbar. So sind beispielsweise C-förmige, I-förmige, L-förmige oder auch T-förmige oder Y-förmige (mit zwei zweiten distalen Enden) usw. ausgebildete Ankerabschnitte 21 denkbar.

In den Figuren 19 und 20 ist eine Ausführungsform einer Innendeckschicht 31 eines Paneels gezeigt. Dabei zeigt die Figur 19 in einer Draufsicht eine Oberseite der Innendeckschicht 31 und die Figur 20 in einer perspektivischen Ansicht einen Abschnitt der in der Figur 19 gezeigte Ausführungsform der Innendeckschicht 31. Die Innendeckschicht 31 weist eine Schienenaufnahmeöffnung 35 auf, welche, wie bereits zuvor beschrieben, vorteilhaft eine Vertiefung, insbesondere eine konkave, nach innen gerichtete Wölbung bzw. Wanne darstellt. Die Schienenaufnahmeöffnung 35 weist vorteilhaft eine geprägte (umlaufende) Wandung 36 sowie einen sich zwischen der geprägten Wandung 36 erstreckenden Innendeckschichtabschnitt 39 auf. Im Innendeckschichtabschnitt 39 ist zumindest eine Durchlassöffnung 37, vorteilhaft sind zumindest zwei Durchlassöffnungen 37 ausgebildet. Diese wenigstens eine Durchlassöffnung 37 ermöglicht den Durchtritt bzw. Durchfluss des in den Zwischenraum des hier nicht gezeigten Paneels eingebrachten Schaums in den Schaumaufnahmeraum 25 des Schienensystems 1, wie beispielsweise in der Figur 17 gezeigt. Die geometrische Form der wenigstens einen Durchlassöffnung 37 kann dabei unterschiedlich ausgeführt sein. Es sind rechteckige, quadratische, vieleckige oder auch runde oder ovale Ausgestaltungen denkbar. Die wenigstens eine Durchlassöffnung 37 ist vorteilhaft in Gestalt eines Lochs, einer Ausnehmung, einer Aussparung oder in vergleichbarer Gestalt ausgebildet. Des Weiteren ist vorteilhaft auch zumindest eine Multifunktionsöffnung 38, besonders vorteilhaft zumindest zwei Multifunktionsöffnungen 38 ausgebildet. Die wenigstens eine Multifunktionsöffnung 38 erstreckt sich dabei vorteilhaft ausgehend von der geprägten Wandung 36 bis zum Innendeckschichtabschnitt 39. Es ist denkbar, dass die wenigstens eine Multifunktionsöffnung 38 eine V-förmige oder U-förmige Gestalt oder eine vergleichbare Gestalt aufweist. Dabei ist es vorteilhaft möglich, dass die beiden Enden der V-Schenkel bzw. der U-Schenkel in einem Abschnitt der geprägten Wandung 36 enden, während die V-Spitze bzw. der U-Bogen im Bereich des Innendeckschichtabschnittes 39 ausgebildet ist. Es sind jedoch auch andere Ausgestaltungen der Multifunktionsöffnung 39 denkbar, sodass diese nicht auf die hier genannte Ausgestaltung eingeschränkt ist. Vorteilhaft erstreckt sich die mindesten eine Multifunktionsöffnung 38 zumindest abschnittsweise in Innendeckschichtlängsrichtung LI sowie zumindest abschnittsweise in Innendeckschichtbreitenrichtung BI. Bei der Erstreckung eines Abschnittes der Multifunktionsöffnung 39 im Bereich der geprägten Wandung 36 erstreckt sich die Multifunktionsöffnung 39, insbesondere der im Bereich der geprägten Wandung 36 ausgebildete Abschnitt der Multifunktionsöffnung 39, zumindest auch abschnittsweise in Innendeckschichthöhenrichtung Hl. Vorteilhaft ist ein Abschnitt der Multifunktionsöffnung 39, insbesondere ein distaler Abschnitt der Multifunktionsöffnung 39, im Bereich einer Ecke der geprägten Wandung 36 ausgebildet. Besonders vorteilhaft weist die Multifunktionsöffnung 39 zwei Abschnitte, insbesondere zwei distale Enden auf, wobei jedes dieser Enden in einer anderen Ecke, insbesondere zweier benachbart zueinander ausgeprägter Ecken, der geprägten Wandung 36 ausgebildet ist. Vorteilhaft erstreckt sich die Multifunktionsöffnung 39 in Innendeckschichtbreitenrichtung BI von einer Ecke der geprägten Wandung 36 bis zur benachbart gelegenen andere Ecke der geprägten Wandung 36. Vorteilhaft dient die Multifunktionsöffnung dazu zum einen Durchtritt bzw. Durchfluss des in den Zwischenraum des hier nicht gezeigten Paneels eingebrachten Schaums in den Schaumaufnahmeraum 25 des Schienensystems 1, wie beispielsweise in der Figur 17 gezeigt, zu ermöglichen. Zum anderen dient die Multifunktionsöffnung 39 dazu ein ungewolltes Einreißen der Ecken bzw. der Kanten der geprägten Wandung 36 und/oder eine ungewollte Materialverschiebung insbesondere beim Prägeprozess zu verhindern. Hierdurch wird eine prozesssichere und definierte Prägung der geprägten Wandung 36 und folglich eine fehlerfreie Erzeugung der Innendeckschicht 31 ermöglicht.

### Bezugszeichenliste

- 1: Schienensystem
- 2: Schiene
- 3: Systemfräsung
- 4: Schienenlängsnut
- 5: Positionsbereich
- 6: Einführbereich
- 7: Klebenut der Schiene/Schienenklebenut
- 8: Lastaufnahmeabschnitt
- 9: Verbindungsabschnitt
- 9.1: (erstes) Verbindungselement
- 9.2: (zweites) Verbindungselement
- 10.1: (erste) Endkappe
- 10.2: (zweite) Endkappe
- 11: Klebenut der Endkappe/Endkappenklebenut
- 12: Endkappenverbindungsabschnitt
- 13: Endkappenoberfläche
- 14: Endkappengrundfläche
- 15: Oberfläche der Schiene/Schienenoberfläche
- 16: Grundfläche der Schiene/Schienengrundfläche
- 17: abgerundete Kanten
- 18: Steg an der Schiene / Schienensteg
- 19: Steg an der Endkappe / Endkappensteg
- 20: Ankerelement
- 21: Ankerabschnitt
- 22: Verbindungsgegenabschnitt
- 22.1: (erstes) Verbindungsgegenelement
- 22.2: (zweites) Verbindungsgegenelement
- 24: Ankerelementöffnungen
- 25: Schaumaufnahmeraum
- 26: Schienenverbindungsabschnitt

- 30: Paneel
- 31: Innendeckschicht
- 32: Außendeckschicht
- 33: Zwischenraum
- 34: (PU-)Schaum
- 35: Schienenaufnahmeöffnung
- 36: geprägte Wandung der Innendeckschicht
- 37: Durchlassöffnungen
- 38: Multifunktionsöffnung
- 39: Innendeckschichtabschnitt

- A: Ausschnitt
- B: Ausschnitt
- BA: Ankerelementbreitenrichtung /Ankerelementbreite
- BS: Schienenbreitenrichtung / Schienenbreite
- BI: Innendeckschichtbreitenrichtung / Innendeckschichtbreite
- C: Ausschnitt
- D: Ausschnitt

- HI: Innendeckschichthöhenrichtung

- L: Schienenlängsrichtung
- LA: Ankerelementlängsrichtung
- LI: Innendeckschichtlängsrichtung

- A-A: Schnitt
- B-B: Schnitt

## Patentansprüche

1. Schienensystem (1) zumindest zum Anordnen von Ladungssicherungselementen in Fahrzeugen, insbesondere Kühlfahrzeugen, wobei die Fahrzeuge zumindest ein Paneel (30) aufweisen,
wobei das Schienensystem (1) wenigstens eine Schiene (2) aufweisend eine Systemfräsung (3) zumindest mit einer sich in Schienenlängsrichtung (L) erstreckenden hinterschnittenen Schienenlängsnut (4),
sowie jeweils eine an jedem distalen Ende der wenigstens einen Schiene (2) angeordnete Endkappe (10.1, 10.2) aufweist,
**dadurch gekennzeichnet, dass**
das Schienensystem (1) zudem ein sich zumindest abschnittweise entlang der Schienenlängsachse (L) erstreckendes Ankerelement (20) wenigstens zur Aufnahme von zumindest im Wesentlichen orthogonal zu einer Schienenlängsachse (L) verlaufenden Kräften, insbesondere Querkräften, zumindest während der Nutzung von Last tragenden Ladungssicherungselementen.

2. Schienensystem (1) gemäß Anspruch 1,
**dadurch gekennzeichnet, dass**
die Schiene (2) einen Lastaufnahmeabschnitt (8) zur Anordnung von Ladungssicherungselementen aufweist, wobei die Systemfräsung (3) ausgehend von einer äußeren Oberfläche des Lastaufnahmeabschnittes (8) ausgebildet ist, und dass die Schiene (2) des Weiteren einen Verbindungsabschnitt (9) zum Anordnen des Ankerelementes (20) oder das Ankerelement (20) umfasst.

3. Schienensystem (1) gemäß einem der vorangegangenen Ansprüche,
**dadurch gekennzeichnet, dass**
das Ankerelement (20) ein von der Schiene (2) separiertes Ankerelement (20) ist, welches zumindest mit einem Verbindungsabschnitt (9) der Schiene (2) und/oder einem Endkappenverbindungsabschnitt (12) der Endkappen (10.1, 10.2) zumindest zeitweise formschlüssig und/oder kraftschlüssig wirkverbunden ist.

4. Schienensystem gemäß Anspruch 3,
**dadurch gekennzeichnet, dass**
der Verbindungsabschnitt (9) zwei einander im Wesentlichen gegenüberliegende Verbindungselemente (9.1, 9.2) aufweist, welche sich jeweils zumindest abschnittsweise entlang der Schienenlängsachse (L) sowie in eine im Wesentlichen orthogonal zur Schienenlängsachse (L) verlaufenden Richtung erstrecken.

5. Schienensystem (1) gemäß Anspruch 4,
**dadurch gekennzeichnet, dass**
das Ankerelement (20) einen Ankerabschnitt (21) sowie einen Verbindungsgegenabschnitt (22) aufweist, wobei der Verbindungsgegenabschnitt (22) zwei einander im Wesentlichen gegenüberliegende Verbindungsgegenelemente (22.1, 22.2) umfasst, welche zumindest mit den Verbindungselementen (9.1, 9.2) des Verbindungsabschnittes (9) der Schiene (2) zumindest zeitweise formschlüssig und/oder kraftschlüssig wirkverbunden sind.

6. Schienensystem (1) gemäß Anspruch 1 oder 2,
**dadurch gekennzeichnet, dass**
das Ankerelement (20) ein mit der Schiene (2) verbundenes Ankerelement (20), insbesondere ein einstückig mit der Schiene (2) verbundenes Ankerelement (20) ist, welches sich zumindest abschnittweise entlang der Schienenlängsachse (L) sowie in einer sich zur Schienenlängsachse (L) im Wesentlichen orthogonalen Richtung erstreckt.

7. Schienensystem (1) gemäß einem der vorangegangenen Ansprüche,
**dadurch gekennzeichnet, dass**
die Endkappen (10.1, 10.2) eine Querschnittsgeometrie aufweisen, welche im Wesentlichen zumindest der Querschnittsgeometrie der Schiene (2) entspricht, sodass die Endkappen (10.1, 10.2) einen Endkappenverbindungsabschnitt (12) zum zumindest zeitweisen formschlüssigen und/oder kraftschlüssigen Wirkverbinden mit einem Ankerelement (20) oder einen Ankerabschnitt (21) aufweisen.

8. Schienensystem (1) gemäß einem der vorangegangenen Ansprüche 2 bis 7,
**dadurch gekennzeichnet, dass**
eine der Oberfläche des Lastaufnahmeabschnittes (8) der Schiene (2) abgewandte Grundfläche des Lastaufnahmeabschnittes (8) der Schiene (2) eine Klebenut (7) aufweist, welche sich zumindest abschnittsweise entlang der Schienenlängsachse (L) erstreckt.

9. Schienensystem (1) gemäß Anspruch 8,
**dadurch gekennzeichnet, dass**
die jeweilige Endkappe (10.1, 10.2) eine Endkappenoberfläche (13) sowie eine der Endkappenoberfläche (13) abgewandte Endkappengrundfläche (14) aufweist, wobei die Endkappengrundfläche (14) eine Klebenut (11) derart umfasst, dass bei Anordnung der Endkappen (10.1, 10.2) an der Schiene (2) das Schienensystem (1) eine umlaufende Klebenut aufweist.

10. Schienensystem (1) gemäß einem der vorangegangenen Ansprüche,
**dadurch gekennzeichnet, dass**
die Systemfräsung (3) eine Vielzahl von Positionsbereichen (5) aufweist, welche als entlang der Schienenlängsachse (L) gleichmäßig zueinander beabstandete Bohrungen in der Oberfläche (15) der Schiene (2) im Bereich der hinterschnittenen Schienenlängsnut (4) oder als innerhalb der hinterschnittenen Schienenlängsnut (4) im Bereich einer der Oberfläche (15) der Schiene (2) gegenüberliegenden Hinterschnittfläche ausgebildete entlang der Schienenlängsachse (L) gleichmäßig zueinander beabstandete Sacklochfräsungen ausgebildet sind.

11. Paneel (30) mit einem Schienensystem (1) gemäß einem der vorangegangenen Ansprüche 1 bis 10,
**dadurch gekennzeichnet, dass**
das Paneel (30) wenigstens eine Innendeckschicht (31), eine Außendeckschicht (31) sowie zwischen der Innendeckschicht (31) und der Außendeckschicht (31) befindlichen Schaum (34), insbesondere Polyurethan-Schaum aufweist, und dass das Schienensystem (1) derart innerhalb des Paneels (30) angeordnet ist, dass die Schiene (2) des Schienensystems (1) zumindest nach dem Ausschäumen des Paneels (30) bündig in der Innendeckschicht (31) des Paneels (30) angeordnet ist, wobei das Ankerelement (20) des Schienensystems (1) zumindest im Wesentlichen orthogonal zur Schienenlängsachse (L) verlaufende Kräfte, insbesondere Querkräfte, zumindest während der Nutzung von Last tragenden Ladungssicherungen aufnimmt.
